# EUROPÄISCHE PATENTSCHRIFT

(11) **EP 2 845 072 B1**
(45) Veröffentlichungstag und Bekanntmachung des Hinweises auf die Patenterteilung: **29.08.2018**
(21) Anmeldenummer: 12798636.2
(22) Anmeldetag: 16.11.2012
(51) Int. Cl.: G05D 3/12, B66D 5/30

(54) **SCHALTGERÄT**
SWITCHING DEVICE
APPAREIL DE COMMUTATION

(30) Priorität: 04.05.2012 DE 202012101654 U
(43) Veröffentlichungstag der Anmeldung: 11.03.2015
(73) Patentinhaber: Chr. Mayr GmbH + Co. KG, 87665 Mauerstetten (DE)
(72) Erfinder: UNSIN, Karl, 86860 Beckstetten (DE); HECHT, Martin, 87600 Kaufbeuren (DE); WIEGERT, Alexander, 73760 Ostfildern (DE); HAHN, Andreas, 73760 Ostfildern (DE); ROESSLER, Berthold, 73760 Ostfildern (DE); HAERTER, Michael, 73760 Ostfildern (DE)
(74) Vertreter: Witte, Weller & Partner Patentanwälte mbB
(86) Internationale Anmeldenummer: PCT/EP2012/072823
(87) Internationale Veröffentlichungsnummer: WO 2013/164041

(56) Entgegenhaltungen:
- WO-A1-2005/101439
- DE-U1-202011 005 655
- US-A1- 2011 240 411

## Beschreibung

Die vorliegende Erfindung betrifft ein Kompaktsteuergerät zum fehlersicheren Ansteuern eines elektrischen Aktors, insbesondere zum Ansteuern einer Sicherheitsbremse, wie sie beispielsweise bei Aufzügen und anderen schwerkraftbelasteten Achsen zum Einsatz kommt. Darüber hinaus betrifft die Erfindung eine Vorrichtung zum fehlersicheren Halten von Lasten mit einer mechanischen Bremse und einem solchen Kompaktsteuergerät.

Es ist bekannt, Sicherheitsbremsen zu verwenden, um Aufzüge und andere vertikal angehobene Lasten gegen ein unkontrolliertes Abstürzen zu sichern. Beispielsweise beschreibt DE 10 2005 048 208 A1 eine solche Sicherheitsbremse für Aufzüge. Die Sicherheitsbremse besitzt einen Rotor, der mit einer abzubremsenden Welle drehfest verbunden ist, sowie eine oder mehrere Ankerplatten, die den Rotor über einen Reibbelag festhalten. Die Ankerplatten sind über Federn so vorgespannt, dass sie eine Drehbewegung des Rotors im Ruhezustand verhindern. Zum Lösen der Bremse muss ein Elektromagnet mit einem Steuerstrom so angeregt werden, dass die Ankerplatten aufgrund der magnetischen Kraft vom Rotor weggezogen werden. Sobald der Strom unterbrochen ist, drücken die Ankerplatten aufgrund der Federkraft wieder gegen den Rotor, so dass bei Stromausfall ein sicherer Halt der Last gewährleistet ist.

Das Einschalten und vor allem das Abschalten des Stroms durch den Elektromagneten ist eine sicherheitskritische Aufgabe, da ein ungewollter Stromfluss, beispielsweise aufgrund eines Fehlers in der elektrischen Steuerung, ein ungewolltes Öffnen der Bremse und damit einen Absturz der Last verursachen kann. Es ist daher üblich, den Elektromagneten mit einer fehlersicheren Steuerung im Sinne der einschlägigen Normen zur Maschinensicherheit anzusteuern. Eine geeignete Sicherheitssteuerung muss in der Regel die Anforderungen gemäß SIL 3 der europäischen Norm EN IEC 61508 und/oder gemäß PL e der Norm EN ISO 13849 erfüllen. Eine solche Sicherheitssteuerung gewährleistet aufgrund von Redundanz, regelmäßigen internen Funktionstests und/oder weiteren Maßnahmen, dass ein Steuerausgang auch dann keinen ungewollten Stromfluss verursacht, wenn in der Sicherheitssteuerung und/oder in den Verbindungsleitungen zur Bremse ein Fehler auftritt, beispielsweise ein Kurzschluss.

Darüber hinaus ist es bekannt, den Zustand der Sicherheitsbremse zu überwachen. Beispielsweise besitzt die aus DE 10 2005 048 208 A1 bekannte Sicherheitsbremse einen Mikroschalter, der das so genannte Einfallen und Lüften der Bremse, d.h. das Lösen der Ankerplatten vom Rotor mit Hilfe des Elektromagneten, signalisiert. Allerdings sind die Ausgänge herkömmlicher Sicherheitssteuerungen nicht dafür ausgelegt, den zum Lüften einer Aufzugbremse benötigten hohen Steuerstrom bereitzustellen. In der Praxis wird der Steuerstrom daher mit Hilfe von Schützen ein- und ausgeschaltet, wobei die Schütze über die Ausgänge einer Sicherheitssteuerung angesteuert werden. Dies erfordert, dass die Sicherheitssteuerung die Funktion der Schaltschütze überwacht, um einen ungewollten Stromfluss durch den Elektromagneten der Sicherheitsbremse auszuschließen. Darüber hinaus kann die Sicherheitssteuerung den Zustand der Bremse mit Hilfe des Mikroschalters überwachen. Sämtliche Steuerungs- und Überwachungsfunktionen müssen vom Anlagenbauer in der Sicherheitssteuerung programmiert und validiert werden.

DE 103 25 363 A1 beschreibt ein Sicherheitsschaltgerät zum fehlersicheren Abschalten eines induktiven Verbrauchers, beispielsweise in Form von Schützen oder Magnetventilen. Beim Abschalten des Stroms durch derartige Verbraucher entsteht aufgrund der Gegeninduktion eine Überspannung, die häufig mit Hilfe einer Löschdiode begrenzt wird. Allerdings ist die für das Abschalten benötigte Zeit um so länger, je stärker die Überspannung begrenzt wird. Das Sicherheitsschaltgerät gemäß DE 103 25 363 A1 besitzt daher ein Löschglied, das eine erste und zumindest eine zweite Löschbetriebsart aufweist, die wahlweise zueinander aktivierbar sind, wobei die Begrenzung der Überspannung in den beiden Löschbetriebsarten unterschiedlich ist. Daher kann dieses Sicherheitsschaltgerät wahlweise ein schnelleres, abruptes Abschalten mit hoher Induktionsspannung oder ein langsameres, sanftes Abschalten mit niedriger Induktionsspannung bewirken.

Ein Meldegerät für eine Sicherheitsschaltung zeigt die Druckschrift WO 2005/101439 A1. Eine verbesserte Schaltzustandsüberwachung für Federdruckbremsen zeigt die Druckschrift DE 20 2011 005 655 U1.

Es besteht der Wunsch, die Ansteuerung einer Sicherheitsbremse unter Beibehaltung der hohen Sicherheitsanforderungen zu vereinfachen. Dementsprechend ist es eine Aufgabe der vorliegenden Erfindung, eine Alternative anzugeben, die eine einfache und trotzdem fehlersichere Ansteuerung einer Sicherheitsbremse oder eines ähnlichen Aktors ermöglicht.

Gemäß einem ersten Aspekt der Erfindung wird zur Lösung dieser Aufgabe ein Kompaktsteuergerät zum fehlersicheren Ansteuern eines elektrischen Aktors, der in der Lage ist, ein bewegliches Maschinenteil in eine definierte Endposition zu bewegen, vorgeschlagen, mit einem ersten Eingangsanschluss zum Aufnehmen eines ersten externen Steuersignals, das eine Sollposition des Maschinenteils vorgibt, mit einem Eingangsteil zum Erfassen eines Positionssignals, das eine Istposition des Maschinenteils an der definierten Endposition signalisiert, mit einem Leistungsteil mit zumindest einem Leistungsschaltelement, das dazu ausgebildet ist, einen Steuerstrom für den Aktor ein- und fehlersicher auszuschalten, mit einem ersten Ausgangsanschluss zum Zuführen des Steuerstroms zu dem elektrischen Aktor, mit einem zweiten Ausgangsanschluss zum Bereitstellen eines externen Statussignals, und mit einer Auswerteeinheit, die dazu ausgebildet ist, das zumindest eine Leistungsschaltelement in Abhängigkeit von dem ersten externen Steuersignal anzusteuern und in Abhängigkeit von dem Positionssignal das externe Statussignal an dem zweiten Ausgangsanschluss zu erzeugen.

Gemäß einem weiteren Aspekt wird eine Vorrichtung zum fehlersicheren Halten von Lasten vorgeschlagen, mit einer mechanischen Bremse, die einen Rotor und eine Ankerplatte aufweist, wobei die Ankerplatte über zumindest eine Feder gegen den Rotor vorgespannt ist, um diesen gegen Bewegung zu sichern, ferner mit einem Elektromagneten, der dazu ausgebildet ist, die Ankerplatte gegen die Feder in eine Freigabeposition zu bewegen, und mit einem Kompaktsteuergerät der vorstehend genannten Art, wobei der Elektromagnet an den ersten Ausgangsanschluss des Kompaktsteuergeräts angeschlossen ist, und wobei das Positionssignal die Freigabeposition der Ankerplatte als definierte Endposition signalisiert.

Das neue Kompaktsteuergerät ist aufgrund des zumindest einen Leistungsschaltelements dazu ausgebildet, die bislang benötigten Schütze zum Ansteuern einer Sicherheitsbremse oder eines vergleichbaren Aktors zu ersetzen. Insbesondere ist das zumindest eine Leistungsschaltelement in den bevorzugten Ausführungsbeispielen in der Lage, einen Steuerstrom von mehr als 2 A und insbesondere einen Steuerstrom von mehr als 4 A oder sogar mehr als 5 A zu schalten.

Das neue Kompaktsteuergerät ersetzt jedoch nicht einfach die bislang benötigten Schütze, d.h. es bewirkt nicht nur den zum Ein- und Ausschalten des Steuerstroms erforderlichen Schaltvorgang. Vielmehr besitzt das Kompaktsteuergerät darüber hinaus die Fähigkeit, die definierte Endposition des beweglichen Maschinenteils - vorzugsweise fehlersicher - zu überwachen. Es übernimmt insbesondere die Einfall-und/oder Lüftüberwachung bei einer elektrisch betätigten Sicherheitsbremse. Daher vereinigt das neue Kompaktsteuergerät die reine Leistungsschaltfunktion der bislang verwendeten Schütze mit (Teil-)Funktionen, die bisher in einer Sicherheitssteuerung programmiert werden mussten. Mit anderen Worten ist das neue Kompaktsteuergerät eine Art intelligenter Schaltaktor, der ein neues Bindeglied zwischen einer Betriebssteuerung für einen Aufzug oder dergleichen und einem Positionsaktor bildet, wobei Letzterer dazu dient, ein bewegliches Maschinenteil in eine definierte Endposition zu bringen.

Das neue Kompaktsteuergerät ist weder dazu vorgesehen noch dazu ausgebildet, die Funktion der Sicherheitssteuerung gänzlich zu übernehmen. Daher stellt das neue Kompaktsteuergerät an dem zweiten Ausgangsanschluss ein externes Statussignal für eine übergeordnete Steuerung bereit. Das externe Statussignal repräsentiert die Position des angesteuerten Maschinenteils, beispielsweise also die Position der Ankerscheibe einer elektrisch betätigten Sicherheitsbremse, als Ergebnis der Vorverarbeitung durch die im Kompaktsteuergerät integrierte Auswerteeinheit. Die übergeordnete Steuerung kann das externe Statussignal als logische und vorzugsweise binäre Information über den tatsächlichen Zustand der Sicherheitsbremse verarbeiten, ohne dass die Steuerung alle Detailinformationen auswerten muss, die für den Zustand des Aktors von Bedeutung sind.

Das neue Kompaktsteuergerät vereinigt somit die wesentlichen sicherheitsrelevanten Funktionen an der elektrischen Schnittstelle zwischen einer Betriebssteuerung für eine lasttragende Anlage und einem angesteuertem Positionsaktor. Es stellt einerseits den hohen Steuerstrom bereit, der zum Betätigen des Aktors benötigt wird. Dabei reagiert das Kompaktsteuergerät auf ein erstes externes Steuersignal, das die Sollposition des Maschinenteils vorgibt. Mit anderen Worten sorgt das Kompaktsteuergerät dafür, dass der "logische" Steuerbefehl der übergeordneten Steuerung mit Hilfe des hohen Steuerstroms ausgeführt wird. Andererseits liefert das Kompaktsteuergerät der übergeordneten Steuerung ein Statussignal, anhand dessen die übergeordnete Steuerung den Erfolg oder Misserfolg bei der Ausführung des "logischen" Steuerbefehls kontrollieren kann. Dabei reduziert sich die Kommunikation zwischen Steuerung und Kompaktsteuergerät auf die Übertragung von logischen Informationen, die Soll- und Istzustand repräsentieren. Die übergeordnete Steuerung muss sich nicht mehr um Details kümmern, die die tatsächliche Ausführung des Steuervorgangs betreffen.

Das neue Kompaktsteuergerät vereinfacht damit die Installation und Inbetriebnahme einer Sicherheitsbremse, da die für die Überwachung der Sicherheitsbremse erforderliche Signalverarbeitung bereits im Kompaktsteuergerät realisiert ist und nicht mehr auf einer übergeordneten Sicherheitssteuerung implementiert werden muss. Insbesondere gewährleistet die Auswerteeinheit des neuen Kompaktsteuergerätes die fehlersichere Überwachung des Schaltvorgangs zum Unterbrechen des Steuerstroms. Des weiteren vereinfacht sich die Verdrahtung des Aktors, da das neue Kompaktsteuergerät den Steuerstrom von sich aus bereits fehlersicher abschalten kann und somit in der Lage ist, zwei redundante Schütze zu ersetzen, die für diesen Zweck bislang benötigt wurden. Die oben genannte Aufgabe ist daher vollständig gelöst.

Vorzugsweise besitzt das neue Kompaktsteuergerät zumindest drei Leistungsschaltelemente, von denen zwei parallel zueinander angeordnet sind. Die beiden parallelen Leistungsschaltelemente können von der Auswerteeinheit parallel zueinander und/oder getrennt voneinander ein- und ausgeschaltet werden, und sie bilden somit zwei parallele und in einigen Varianten separat schaltbare Leistungsschaltpfade. Ein weiteres der zumindest drei Leistungsschaltelemente bildet innerhalb des Kompaktsteuergerätes ein redundantes Schaltelement für die parallelen Leistungsschaltpfade.

In dieser Ausgestaltung ist das Kompaktsteuergerät in der Lage, zwei Aktoren, beispielsweise zwei redundante Sicherheitsbremsen, parallel zueinander ein- und auszuschalten. Dementsprechend ist das Kompaktsteuergerät in dieser Ausgestaltung in der Lage, vier Schütze zu ersetzen, die bislang benötigt wurden, um zwei Sicherheitsbremsen fehlersicher zu lüften. Vorzugsweise ist zumindest ein drittes Leistungsschaltelement, das ebenfalls von der Auswerteeinheit angesteuert wird, in Serie zu den beiden parallelen Leistungsschaltelementen angeordnet, die die parallelen Schaltpfade bilden. Damit kann die Auswerteeinheit jeden der beiden Schaltpfade auf zumindest zwei verschiedene Arten und damit fehlersicher unterbrechen.

In einer weiteren Ausgestaltung besitzt das Kompaktsteuergerät einen zweiten Eingangsanschluss zum Aufnehmen eines zweiten externen Steuersignals, das die Sollposition des Maschinenteils redundant mit dem ersten externen Steuersignal vorgibt.

In dieser Ausgestaltung steuert die Auswerteeinheit des neuen Kompaktsteuergerätes das zumindest eine Leistungsschaltelement in Abhängigkeit von zwei externen Steuersignalen an. Diese Ausgestaltung ermöglicht eine höhere Fehlersicherheit, da beispielsweise Quer- und Kurzschlüsse im Bereich der Verbindungsleitungen zwischen Kompaktsteuergerät und übergeordneter Steuerung zuverlässig erkannt werden können.

In einer weiteren Ausgestaltung besitzt das Kompaktsteuergerät einen dritten Eingangsanschluss zum Aufnehmen eines externen dritten Steuersignals, das die Sollposition des Maschinenteils unabhängig von dem ersten externen Steuersignal vorgibt, wobei die Auswerteeinheit den Steuerstrom in Abhängigkeit von dem dritten Steuersignal langsamer abschaltet als in Abhängigkeit von dem ersten Steuersignal.

In dieser Ausgestaltung besitzt das Kompaktsteuergerät zwei verschiedene Eingänge zum Aufnehmen eines externen Steuersignals, das die Position des beweglichen Maschinenteils bestimmt. Da die Auswerteeinheit den Steuerstrom in Abhängigkeit von dem dritten Steuersignal langsamer abschaltet als in Abhängigkeit von dem ersten Steuersignal, eignen sich die beiden verschiedenen Eingänge für unterschiedliche Betriebssituationen. Soll die Ankerplatte einer Sicherheitsbremse in einer Notsituation so schnell wie möglich mit dem Rotor der Sicherheitsbremse in Kontakt gebracht werden, muss der Steuerstrom für den Elektromagneten schnellstmöglich abgeschaltet werden. Dabei ist eine Begrenzung der Induktionsspannung, die beim Abschalten des Steuerstroms auftritt, nachteilig. Soll das Schließen der Bremse hingegen nicht in einer Notsituation erfolgen, sondern beispielsweise zur Sicherung eines bereits angehaltenen Aufzugs oder langsamen Anhalten einer Kulisse in einem Theater, ist es vorteilhaft, die beim Abschalten des Steuerstroms auftretende Induktionsspannung zu begrenzen und den Steuerstrom somit langsamer abklingen zu lassen. Das neue Kompaktsteuergerät besitzt in dieser Ausgestaltung zwei Eingänge, über die eine übergeordnete Steuerung wahlweise die Not-Abschaltung oder die sanftere Abschaltung auslösen kann. Das neue Kompaktsteuergerät ermöglicht daher eine flexible Ansteuerung, wobei die Auswahl der gewünschten "Bremsart" allein anhand des für die Zuführung des externen Steuersignals verwendeten Eingangs möglich ist. Dies ermöglicht eine kostengünstige Realisierung mit hoher Fehlersicherheit.

Prinzipiell ist es möglich, dass der zweite Eingangsanschluss und der dritte Eingangsanschluss identisch sind, wobei in diesem Fall zwei redundante externe Steuersignale am ersten und zweiten Eingangsanschluss eine Not-Abschaltung signalisieren, wohingegen nicht-redundante Steuersignale an den beiden Eingangsanschlüssen eine langsame Abschaltung des Steuerstroms auslösen. Redundante Eingangssignale in diesem Sinne sind insbesondere solche, die zueinander synchrone Signalwechsel aufweisen, wohingegen nicht-redundante Signale voneinander unabhängige Signalwechsel aufweisen. In bevorzugten Ausführungsbeispielen sind die Signalwechsel Flankenwechsel eines binären Spannungssignals, mit dem die übergeordnete Steuerung dem Kompaktsteuergerät signalisiert, welche Sollposition das Maschinenteil einnehmen soll.

In einer weiteren Ausgestaltung ist zumindest das erste externe Steuersignal daher ein binäres Steuersignal. Vorzugsweise sind auch das zweite externe Steuersignal und/oder das dritte externe Steuersignal binäre Steuersignale.

In dieser Ausgestaltung ist das Kompaktsteuergerät im Wesentlichen darauf beschränkt, den Steuerstrom einzuschalten oder auszuschalten. Dementsprechend kann der elektrische Aktor das bewegliche Maschinenteil nur in die definierte Endposition bringen oder nicht. Beliebige Zwischenpositionen sind in dieser Ausgestaltung nicht vorgesehen. Damit eignet sich das neue Kompaktsteuergerät besonders zum kostengünstigen Einfallen und Lüften einer Sicherheitsbremse, zum Öffnen oder Schließen eines Magnetventils oder zum Ansteuern eines anderen Aktors, der lediglich einen aktiven und einen inaktiven Zustand besitzt.

In einer weiteren Ausgestaltung weist der Eingangsteil zumindest einen weiteren Eingangsanschluss auf, über den das Positionssignal als ein externes Positionssignal an die Auswerteeinheit zuführbar ist. Vorzugsweise besitzt der Eingangsteil zwei weitere Eingangsanschlüsse zum Aufnehmen von zwei externen Positionssignalen, wobei jedes der zwei externen Positionssignale einen Aktor repräsentiert.

Diese Ausgestaltung ermöglicht eine sehr einfache und kostengünstige Realisierung, indem das Kompaktsteuergerät beispielsweise den bei der eingangs beschriebenen Sicherheitsbremse vorhandenen Mikroschalter über den weiteren Eingangsanschluss einliest. Das Kompaktsteuergerät dieser Ausgestaltung eignet sich daher besonders zum Ansteuern von Aktoren, bei denen die definierte Endposition des beweglichen Maschinenteils bereits über ein externes binäres Positionssignal signalisiert wird.

In einer weiteren Ausgestaltung besitzt das Kompaktsteuergerät einen dritten Ausgangsanschluss, an dem die Auswerteeinheit ein erstes Testsignal bereitstellt, das über einen externen Positionsschalter als binäres Positionssignal zu dem Eingangsteil rückführbar ist.

Diese Ausgestaltung ermöglicht eine sehr komfortable und kostengünstige Realisierung, da das Kompaktsteuergerät in dieser Ausgestaltung in der Lage ist, einen Positionsschalter durch Zurücklesen eines vom Kompaktsteuergerät bereitgestellten Testsignals zu überwachen. Da die Auswerteeinheit das Testsignal kennt, lässt sich die Überwachung des externen Positionsschalters sehr einfach konfigurieren. Ein spezielles "Anlernen" des Kompaktsteuergerätes auf ein extern zugeführtes Positionssignal kann entfallen.

In einer weiteren Ausgestaltung weist der Steuerstrom beim Einschalten einen aktuellen Stromverlauf auf, der von dem Aktor abhängt, und der Eingangsteil vergleicht den aktuellen Stromverlauf mit einem definierten Referenzverlauf, um das Positionssignal zu bestimmen.

In dieser Ausgestaltung ist das Kompaktsteuergerät in der Lage, die Istposition des Maschinenteils an der definierten Endposition anhand des Stromverlaufs zu bestimmen, der sich beim Einschalten des Steuerstroms ergibt. Wie nachfolgend in einem bevorzugten Ausführungsbeispiel erläutert ist, besitzt der Steuerstrom durch den Elektromagneten einer Sicherheitsbremse einen charakteristischen Verlauf, aus dem sich erkennen lässt, ob der Elektromagnet die Ankerplatte tatsächlich gegen die Federkraft zurückgezogen hat. Vergleichbares gilt für Magnetventile und andere elektromagnetisch betätigte Aktoren. Das Kompaktsteuergerät dieser Ausgestaltung ist in der Lage, einen solchen Stromverlauf auszuwerten, um so einen Rückschluss auf die Position des bewegten Maschinenteils zu ziehen. Die Ausgestaltung besitzt den Vorteil, dass auf eine externe Verdrahtung zu einem Positionssensor verzichtet werden kann. Dies spart zum einen den entsprechenden Installationsaufwand und führt zum anderen zu einer erhöhten Fehlersicherheit, da eine externe Verdrahtung stets die Gefahr von Kurz- oder Querschlüssen zu vorhandenen Spannungspotenzialen birgt. Der definierte Referenzverlauf kann in Ausführungsbeispielen in Form einer mathematischen Funktion, in Form von Tabellenwerten, in Form von Parametern für eine Rechenoperation oder in sonstiger Weise als Sollcharakteristik hinterlegt sein.

In einer weiteren Ausgestaltung erzeugt die Auswerteeinheit an dem zweiten Ausgangsanschluss ein Fehlersignal, wenn das Positionssignal innerhalb einer definierten ersten Zeitspanne nach Einschalten des Steuerstroms keine Istposition des Maschinenteils an der definierten Endposition signalisiert.

In dieser Ausgestaltung überwacht die Auswerteeinheit das Resultat, das mit dem Einschalten des Steuerstroms erreicht werden soll, nämlich dass der elektrische Aktor das Maschinenteil in die definierte Endposition bewegt. Das Kompaktsteuergerät signalisiert das Resultat an dem zweiten Ausgangsanschluss, und zwar vorzugsweise mit Hilfe eines binären Fehlersignals. Damit trägt diese Ausgestaltung dazu bei, eine übergeordnete Betriebssteuerung von der sicherheitstechnischen Überwachung des elektrischen Aktors zu entlasten.

In einer weiteren Ausgestaltung beinhaltet das zumindest eine Leistungsschaltelement ein erstes Leistungsschaltelement und ein zweites Leistungsschaltelement, die den Steuerstrom redundant zueinander schalten. Vorzugsweise sind die Leistungsschaltelemente Halbleiterschaltelemente. Des Weiteren ist es bevorzugt, wenn die Auswerteeinheit den jeweiligen Zustand des Leistungsschaltelements geräteintern zurückliest, indem die Auswerteeinheit die Spannung und/oder den Strom an dem ersten Ausgangsanschluss überwacht.

Halbleiterschaltelemente besitzen gerade im Vergleich zu den bislang verwendeten Schützen den Vorteil, dass sie hohe Steuerströme verschleißfrei schalten können. Damit erreicht das neue Kompaktsteuergerät eine hohe Schalthäufigkeit und eine hohe Schaltzuverlässigkeit. Die Verwendung von zueinander redundanten Leistungsschaltelementen, die den Steuerstrompfad gemeinsam öffnen oder schließen, ermöglicht auf recht einfache Weise die Eigenfehlersicherheit. In einem Ausführungsbeispiel besitzt das Kompaktsteuergerät vier Leistungsschaltelemente, wobei jeweils zwei der vier Leistungsschaltelemente gemeinsam und redundant zueinander einen Steuerstrom schalten.

In einer weiteren Ausgestaltung beinhaltet der erste Ausgangsanschluss einen ersten positiven Ausgangsanschluss und einen ersten negativen Ausgangsanschluss, die zusammen einen redundanten zweipoligen Ausgang zum Anschließen des Aktors bilden.

In dieser Ausgestaltung sind die zueinander redundanten Leistungsschaltelemente stromaufwärts und stromabwärts von dem angesteuerten Aktor angeordnet. Der Steuerstrom fließt vom ersten positiven Ausgangsanschluss zum Aktor und vom Aktor über den ersten negativen Ausgangsanschluss zurück zum Kompaktsteuergerät. Alternativ hierzu ist es in anderen Ausgestaltungen möglich, den Aktor zwischen einem Ausgangsanschluss des Kompaktsteuergerätes und einem Massepotential anzuordnen. Die bevorzugte Ausgestaltung bietet den Vorteil, den vom Aktor zurückfließenden Steuerstrom im Kompaktsteuergerät zu überwachen. Des Weiteren ist eine Trennung zwischen dem Leistungskreis, in dem der relativ hohe Steuerstrom fließt, und einem Logikkreis, in dem die Auswerteeinheit die eingangsseitigen Steuersignale verarbeitet und die externen Statussignale bereitstellt, gewährleistet. Das Risiko einer fehlerhaften Ansteuerung des Aktors aufgrund einer falschen Verdrahtung ist weiter reduziert.

In einer weiteren Ausgestaltung erzeugt der Leistungsteil eine Steuerspannung, die den Steuerstrom zu dem Aktor hervorruft, wobei die Auswerteeinheit die Steuerspannung nach Ablauf einer definierten Zeitspanne nach Einschalten des Steuerstroms absenkt. In den bevorzugten Ausführungsbeispielen senkt die Auswerteeinheit die Steuerspannung ab, indem sie das zumindest eine Leistungsschaltelement pulsweise ansteuert und dementsprechend eine Pulsweitenmodulation der Steuerspannung bewirkt.

Es hat sich gezeigt, dass der Steuerstrom zum Öffnen einer Sicherheitsbremse aus dem geschlossenen Zustand höher sein muss als zum Halten der Bremse im geöffneten (gelüfteten) Zustand. Die vorliegende Ausgestaltung nutzt diesen Effekt, um die Steuerspannung nach Abschluss des Öffnungsvorgangs abzusenken. In den bevorzugten Ausführungsbeispielen überwacht die Auswerteeinheit das Absenken der Steuerspannung nach Ablauf einer definierten Zeitspanne, und sie erzeugt ein Fehlersignal, wenn die Steuerspannung nach Ablauf dieser Zeitspanne nicht auf einen definierten niedrigeren Wert absinkt. Dieses Fehlersignal wird vorteilhafterweise an dem zweiten Ausgangsanschluss mit Hilfe des externen Statussignals bereitgestellt. Das Absenken der Steuerspannung ermöglicht ein schnelleres Abschalten des Steuerstroms und damit das schnellere Schließen einer Sicherheitsbremse in einer Notfallsituation, da bei geringerer Spannung weniger Energie im elektrischen Aktor gespeichert ist. Somit trägt diese Ausgestaltung zu einer schnelleren Reaktion im Fehlerfall bei. Die Überwachung der zweiten Zeitspanne gewährleistet, dass ein Fehler im Kompaktsteuergerät, der sich nachteilig auf die Abschaltzeit des Steuerstroms auswirken könnte, frühzeitig erkannt wird.

In einer weiteren Ausgestaltung überwacht die Auswerteeinheit die Steuerspannung in Bezug auf eine untere Grenze und in Bezug auf eine obere Grenze, wobei die Auswerteeinheit das externe Statussignal auch in Abhängigkeit von der überwachten Steuerspannung erzeugt.

Eine Überwachung der Steuerspannung in Bezug auf eine untere Grenze ist vorteilhaft, um ein ungeplantes und/oder unerwartetes Schließen der Sicherheitsbremse oder allgemeiner ein ungeplantes/unerwartetes Zurückfallen des beweglichen Maschinenteils aus der definierten Endposition zu verhindern. Insbesondere bei Verwendung des neuen Kompaktsteuergeräts an einem Aufzug oder einer anderen schwerkraftbelasteten Achse trägt diese Ausgestaltung zu einem sicheren und reibungslosen Betrieb bei. Die Überwachung der Steuerspannung auf eine obere Grenze gewährleistet, dass in einer Notfallsituation ein schnelles Abschalten des Steuerstroms möglich ist. Je geringer die Steuerspannung ist, desto weniger Energie muss beim Abschalten des Steuerstroms abgebaut werden.

In einer weiteren Ausgestaltung ist das Leistungsschaltelement dazu ausgebildet, einen Steuerstrom von mehr als 2 Ampere zu schalten. In bevorzugten Ausführungsbeispielen ist das zumindest eine Leistungsschaltelement in der Lage, einen Steuerstrom von mehr als 5 Ampere zu schalten.

Wie bereits weiter oben angedeutet wurde, ermöglicht diese Ausgestaltung, das neue Kompaktsteuergerät anstelle der bislang benötigten Schütze zum Ansteuern einer Sicherheitsbremse oder eines ähnlichen Aktors zu verwenden, wobei in das Kompaktsteuergerät im Vergleich zu den bislang verwendeten Schützen integrierte Überwachungs- und Auswertefunktionen besitzt, die eine wesentlich einfachere Installation und Ansteuerung einer Sicherheitsbremse ermöglichen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung eines Ausführungsbeispiels des neuen Kompaktsteuergerätes in einer bevorzugten Vorrichtung zum fehlersicheren Halten von Lasten,
- Fig. 2: eine vereinfachte Darstellung einer Sicherheitsbremse, die mit dem neuen Kompaktsteuergerät angesteuert wird, in einer ersten Betriebs-position,
- Fig. 3: die Sicherheitsbremse aus Fig. 2 in einer zweiten Betriebsposition,
- Fig. 4: zwei Steuersignale am Eingang und Ausgang des Kompaktsteuergerätes aus Fig. 1, und
- Fig. 5: einen charakteristischen Stromverlauf des Steuerstroms beim Ein- und Ausschalten in einer vereinfachten Darstellung.

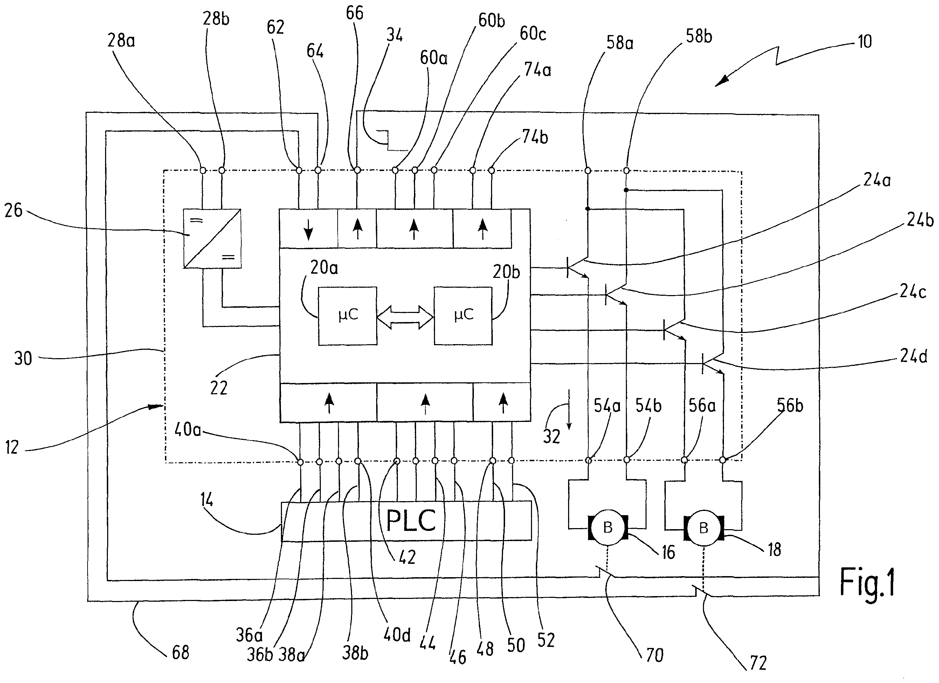

In Fig. 1 ist eine Vorrichtung mit einem Ausführungsbeispiel des neuen Kompaktsteuergerätes in ihrer Gesamtheit mit der Bezugsziffer 10 bezeichnet. Die Vorrichtung 10 beinhaltet ein Kompaktsteuergerät 12, das über mehrere Verbindungsleitungen mit einer übergeordneten Steuerung 14 verbunden ist. Das Kompaktsteuergerät 12 steuert hier zwei redundante Sicherheitsbremsen 16, 18 in Abhängigkeit von Steuersignalen an, die von der übergeordneten Steuerung bereitgestellt werden. Beispielsweise dienen die Sicherheitsbremsen 16, 18 in redundanter Anordnung dazu, um einen Personenaufzug oder eine andere Last gegen Herabfallen zu sichern. Die Verwendung des neuen Kompaktsteuergerätes ist jedoch nicht auf die Ansteuerung von Sicherheitsbremsen beschränkt. Beispielsweise kann das neue Kompaktsteuergerät in anderen Ausführungsbeispielen zum Ansteuern von Magnetventilen und weiteren - vorzugsweise induktiven - elektrischen Aktoren verwendet werden, bei denen ein hoher Steuerstrom fehlersicher ausgeschaltet werden soll.

Das Kompaktsteuergerät 12 besitzt in diesem Ausführungsbeispiel zwei zueinander redundante Prozessoren 20a, 20b, die die nachfolgend beschriebenen Eingangssignale redundant verarbeiten und in Abhängigkeit davon die nachfolgend beschriebenen Ausgangssignale erzeugen. Die Prozessoren 20a, 20b bilden zusammen eine fehlersichere Auswerteeinheit, 22, indem sie sich gegenseitig überwachen, wie dies mit Hilfe eines Doppelpfeils in Fig. 1 dargestellt ist. Des Weiteren besitzt das Kompaktsteuergerät 12 hier einen Leistungsteil mit vier Leistungsschaltelementen 24a, 24b, 24c, 24d. In den bevorzugten Ausführungsbeispielen sind die Leistungsschaltelemente 24 jeweils Halbleiterschaltelemente, beispielsweise Feldeffekttransistoren, die einen Steuerstrom von mehr als 5 Ampere ein- und ausschalten können. Der jeweilige Schaltzustand der Leistungsschaltelemente 24 wird mit Hilfe der Auswerteeinheit 22 bestimmt und eingestellt.

Mit der Bezugsziffer 26 ist ein Netzteil bezeichnet, das die zum Betrieb der Prozessoren 20a, 20b und zum Betrieb der Leistungsschaltelemente 24a bis 24d benötigte interne Betriebsspannung aus einer von außen an Eingangsklemmen 28a, 28b angelegten externen Betriebsspannung erzeugt. In einem Ausführungsbeispiel ist die an die Klemmen 28a, 28b angelegte externe Betriebsspannung 24 Volt und das Netzteil 26 erzeugt interne Betriebsspannungen von beispielsweise 3,3 Volt und/oder 5 Volt.

In den bevorzugten Ausführungsbeispielen sind die Auswerteeinheit 22 und die Leistungsschaltelemente 24 sowie das Netzteil 26 in einem gemeinsamen Gerätegehäuse 30 angeordnet. Dementsprechend ist das Steuergerät 12 ein kompaktes Steuergerät, das in den bevorzugten Ausführungsbeispielen die einzige Verbindung zwischen der übergeordneten Steuerung 14 und den Sicherheitsbremsen 16, 18 bildet. In diesen Ausführungsbeispielen sendet die Steuerung 14 logische Steuersignale an das Kompaktsteuergerät 12, wobei die logischen Steuersignale einen Sollzustand der Sicherheitsbremsen 16 vorgeben. Das Kompaktsteuergerät 12 erzeugt einerseits die Leistungssignale, insbesondere den Steuerstrom 32, mit dem die Sicherheitsbremsen 16, 18 vom inaktiven Zustand in einen aktiven Zustand versetzt werden. Andererseits erzeugt das Kompaktsteuergerät 12 externe Statussignale, die der Steuerung 14 eine Rückmeldung über den tatsächlichen Betriebszustand der Sicherheitsbremsen 16, 18 geben, insbesondere ein Fehlersignal 34. In den bevorzugten Ausführungsbeispielen ist das Kompaktsteuergerät 12 lediglich ein den Aktoren 16, 18 vorgeschaltetes Leistungssteuergerät, das die konkrete Ansteuerung der Aktoren 16, 18 fehlersicher durchführt und überwacht. Die Betriebssteuerung der Anlage einschließlich der Entscheidung, wann die Sicherheitsbremsen 16, 18 geöffnet oder geschlossen werden sollen, obliegt allein der übergeordneten Steuerung 14. Dementsprechend bildet das Kompaktsteuergerät 12 ein Bindeglied zwischen der Steuerung 14 und den Aktoren 16, 18.

In dem dargestellten Ausführungsbeispiel ist die Steuerung 14 eine Sicherheitssteuerung, die ihrerseits eine fehlersichere Signalverarbeitung im Sinne der Kategorie SIL 3 der europäischen Norm EN IEC 61508 und/oder PL e gemäß EN ISO 13849 ermöglicht. Die Steuerung 14 erzeugt hier dementsprechend ein erstes Steuersignal 36a und ein redundantes zweites Steuersignal 38a, die zusammen ein gemeinsames Steuersignal bilden, das das Lösen ("Lüften") der Sicherheitsbremse 16 bewirken soll. Bevorzugt sind die beiden Steuersignale 36a, 38a jeweils binäre Spannungssignale, die auf eine Signalmasse bezogen sind. Im dargestellten Ausführungsbeispiel besitzt jedes Steuersignal 36, 38 eine eigene Signalmasse 36b, 38b, so dass in diesem Fall vier Leitungen zur Übertragung der beiden redundanten Steuersignale von der Steuerung 14 zum Kompaktsteuergerät 12 benötigt werden. Alternativ kann das Kompaktsteuergerät 12 hier an den Eingängen 40a - 40d ein zweipoliges Eingangssignal aufnehmen. In anderen Ausführungsbeispielen können das erste und zweite Steuersignal 36, 38 eine gemeinsame Signalmasse verwenden, so dass zwei Steuerleitungen und eine gemeinsame Masseleitung für die Übertragung der redundanten Steuersignale ausreichen. Darüber hinaus ist es in weiteren Ausführungsbeispielen denkbar, dass die Steuerung 14 das erste Steuersignal 36 lediglich einkanalig an das Kompaktsteuergerät 12 sendet, sofern eine Querschlusserkennung nicht benötigt wird oder auf andere Weise realisiert ist. Letzteres kann beispielsweise mit Hilfe eines dynamisch codierten Signals erfolgen, das von der Steuerung 14 über eine einkanalige Verbindungsleitung an das Kompaktsteuergerät 12 übertragen wird.

Das Kompaktsteuergerät 12 besitzt zur Aufnahme des ersten und zweiten Steuersignals 36, 38 vier Eingangsanschlüsse, von denen zwei mit 40a, 40d bezeichnet sind. Die Eingangsanschlüsse 40a, 40d sind in den bevorzugten Ausführungsbeispielen als Schraub- und/oder Steckanschlüsse an einer Gehäuseaußenseite des Gerätegehäuses 30 ausgebildet, und sie sind in der Lage, Verbindungsleitungen von der Steuerung 14 in bekannter Weise zu befestigen.

Das Kompaktsteuergerät 12 ist hier in der Lage, zwei redundante Aktoren, insbesondere also zwei redundante Sicherheitsbremsen 16, 18, anzusteuern. Daher besitzt das Kompaktsteuergerät 12 in diesem Ausführungsbeispiel vier weitere Eingangsanschlüsse 42, an denen ein erstes und ein redundantes zweites Steuersignal 44, 46 von der Steuerung 14 zugeführt werden können, wobei die Steuersignale 44, 46 hier die Sollposition der zweiten Sicherheitsbremse 18 vorgeben.

Des Weiteren besitzt das Kompaktsteuergerät 12 in diesem Ausführungsbeispiel zwei Eingangsanschlüsse 48, an denen jeweils ein drittes Steuersignal 50, 52 zugeführt werden kann. Das dritte Steuersignal 50 und 52 ist jeweils ein einkanaliges Steuersignal, das eine Sollposition der Sicherheitsbremsen 16 bzw. 18 vorgibt, wobei das Kompaktsteuergerät 12 dazu ausgebildet ist, den Steuerstrom 32 in Abhängigkeit von dem Steuersignal 50/52 vergleichsweise langsam abzuschalten, wohingegen der Steuerstrom 32 in Abhängigkeit von den ersten und zweiten Steuersignalen 36, 38 bzw. 44, 46 schnellstmöglich unterbrochen wird. In den bevorzugten Ausführungsbeispielen besitzt das Kompaktsteuergerät 12 daher für jeden Steuerstrompfad ein Löschglied mit zumindest zwei Löschbetriebsarten, wie dies aus der eingangs genannten DE 103 25 363 A1 bekannt ist. Dieses Dokument bzw. die inhaltsgleiche US 7,573,693 sind hier durch Bezugnahme aufgenommen.

Insgesamt kann die Steuerung 14 also das Schließen der Sicherheitsbremsen 16, 18 in einer Notfallsituation sehr schnell bewirken, indem sie das Unterbrechen des Steuerstroms 32 über die Steuersignale 36/38 und 44/46 vorgibt. Alternativ hierzu kann die Steuerung 14 ein Unterbrechen des Steuerstroms 32 über die Steuersignale 50, 52 vorgeben. Nur für die schnelle Not-Abschaltung des Steuerstroms werden im vorliegenden Ausführungsbeispiel redundante erste und zweite Steuersignale verwendet, wohingegen die (dritten) Steuersignale für das langsame Schließen der Bremsen einkanalige binäre Signale sind.

Das Kompaktsteuergerät 12 besitzt ferner vier Ausgangsanschlüsse 54a, 54b und 56a, 56b, wobei die Ausgangsanschlüsse 54a, 54b einen ersten zweipoligen Ausgangsanschluss zum Anschließen der Sicherheitsbremse 16 bilden, während die Ausgangsanschlüsse 56a, 56b einen zweiten zweipoligen Ausgangsanschluss zum Anschließen der Sicherheitsbremse 18 bilden. Der Steuerstrom 32 fließt über den Ausgangsanschluss 54a zu der Bremse 16 und über den Ausgangsanschluss 54b zurück zum Kompaktsteuergerät 12. Die zum Erzeugen des Steuerstroms 32 benötigte Spannung erhält das Kompaktsteuergerät 12 in diesem Ausführungsbeispiel über zwei Versorgungsanschlüsse 58a, 58b. Im dargestellten Ausführungsbeispiel ist das Kompaktsteuergerät 12 ausgebildet, eine Versorgungsspannung von 24V und/oder 48 Volt an den Versorgungsanschlüssen 58a, 58b aufzunehmen. Wie in Fig. 1 dargestellt ist, ist die zweite Sicherheitsbremse 18 parallel zu der ersten Sicherheitsbremse 16 an die Versorgungsspannung an den Versorgungsanschlüssen 58a, 58b angeschlossen.

Das Kompaktsteuergerät 12 besitzt ferner drei weitere Ausgangsanschlüsse 60a, 60b, 60c, an denen die Auswerteeinheit 22 externe Statussignale bereitstellt, die den jeweiligen Istzustand der Bremsen 16, 18 und/oder einen Fehlerzustand des Kompaktsteuergerätes 12 signalisieren. In den bevorzugten Ausführungsbeispielen sind die Ausgangsanschlüsse 60a, 60b, 60c mit entsprechenden Eingängen der Steuerung 14 verbunden, was hier aus Gründen der Übersichtlichkeit nicht dargestellt ist.

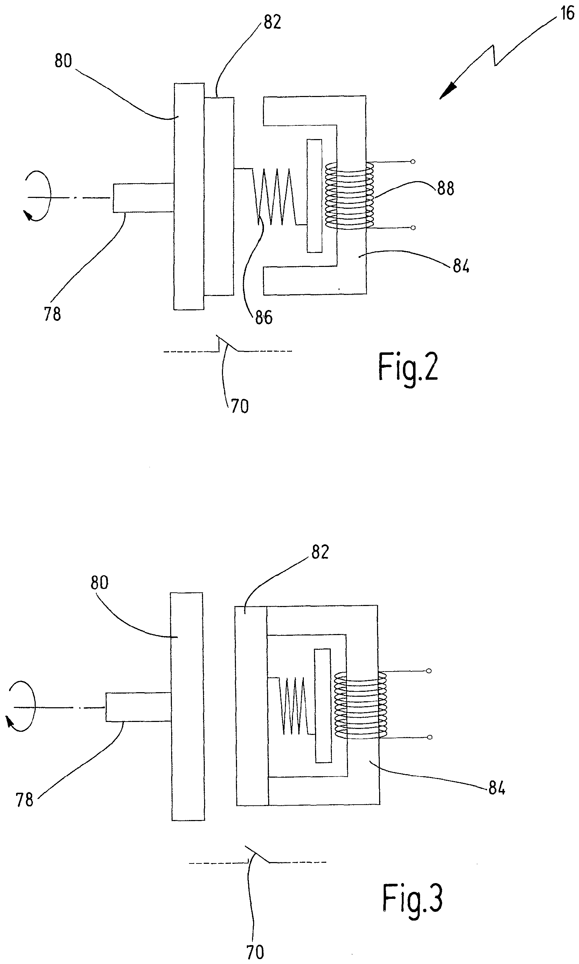

Des Weiteren besitzt das Kompaktsteuergerät 12 hier zwei Eingangsanschlüsse 62, 64, die zum Aufnehmen eines externen Positionssignals dienen, das den jeweiligen Istzustand der Aktoren 16, 18 repräsentiert. Im dargestellten Ausführungsbeispiel besitzt das Kompaktsteuergerät 12 einen weiteren Ausgangsanschluss 66, über den die Auswerteeinheit 22 ein Testsignal 68 bereitstellt. In dem dargestellten Ausführungsbeispiel ist das Testsignal 68 über einen ersten Schalter 70 auf den Eingangsanschluss 62 zurückgeführt. Des Weiteren ist das Testsignal 68 über einen weiteren Schalter 72 auf den Eingangsanschluss 64 zurückgeführt. Die Schaltstellung der Schalter 70, 72 hängt davon ab, ob die Sicherheitsbremsen 16, 18 geöffnet oder geschlossen sind, wie dies nachfolgend anhand der Fig. 2 und 3 näher erläutert ist. Dabei repräsentiert die Schaltstellung des Schalters 70 den Betriebszustand der Sicherheitsbremse 16, während der Schalter 72 den Betriebszustand der Sicherheitsbremse 18 repräsentiert. Mit Hilfe des Testsignals 68 und der Schalter 70, 72 kann die Auswerteeinheit 22 daher den Betriebszustand der jeweiligen Sicherheitsbremse detektieren. Mit Hilfe der Statussignale an den Ausgangsanschlüssen 60a bis 60c signalisiert das Kompaktsteuergerät 12 den jeweils erkannten Betriebszustand für die Steuerung 14. Im bevorzugten Ausführungsbeispiel signalisiert das Kompaktsteuergerät 12 über den Ausgangsanschluss 60a, ob ein fehlerfreier Betrieb vorliegt oder nicht. Dementsprechend wird über den Ausgangsanschluss 60a das Fehlersignal 34 ausgegeben, das im vorliegenden Fall ein binäres Fehlersignal ist. Ein High-Signal signalisiert einen fehlerfreien Betrieb, während ein Low-Signal auf einen Fehler hinweist. Es versteht sich, dass die Bedeutung der Signalpegel auch umgekehrt sein kann, wobei die hier gewählte Zuordnung bevorzugt ist, da nur ein aktiver High-Pegel einen fehlerfreien Betrieb signalisiert.

Über den Ausgangsanschluss 60b signalisiert das Kompaktsteuergerät 12 den Betriebszustand der Sicherheitsbremse 16. Über den Ausgangsanschluss 60c signalisiert das Kompaktsteuergerät 12 den Betriebszustand der Sicherheitsbremse 18.

Schließlich besitzt das Kompaktsteuergerät 12 noch zwei weitere Ausgangsanschlüsse 74a, 74b. An diesen Ausgangsanschlüssen erzeugt die Auswerteeinheit 22 zwei relativ zueinander phasenverschobene Taktsignale (hier nicht dargestellt), die vorteilhaft verwendet werden können, wenn das Kompaktsteuergerät 12 nicht mit einer Steuerung 14 verbunden werden soll, die potenzialbezogene Steuersignale an den Eingangsklemmen 40, 42 und 48 zur Verfügung stellt. Beispielsweise gibt es auch Steuerungen, die Ausgänge mit potenzialfreien Relaiskontakten besitzen, deren Zustand ein nachfolgendes Gerät mit Hilfe von Testsignalen überwachen muss. Die Taktsignale an den Ausgangsklemmen 74a, 74b sind dazu ausgebildet, derartige Ausgänge einer vorgelagerten Steuerung zu überwachen, indem die phasenverschobenen Taktsignale über die jeweiligen Ausgangsrelais der Steuerung auf die Eingangsanschlüsse 40, 42 und 48 zurückgeführt werden. Dementsprechend ist die Auswerteeinheit 22 in der Lage, wahlweise potenzialbezogene Steuersignale an den Eingängen 40, 42, 48 zu verarbeiten oder an den Eingängen 40, 42, 48 anliegende Taktsignale mit den an den Ausgangsanschlüssen 74a, 74b bereitgestellten Taktsignalen zu vergleichen und in Abhängigkeit davon die Leistungsschaltelemente 24a bis 24d anzusteuern.

Im Folgenden wird anhand der Fig. 2 und 3 die Funktion der Sicherheitsbremsen 16, 18 beschrieben. Jede der beiden Bremsen ist dazu ausgebildet, eine Welle 78 gegen eine Drehbewegung um die jeweilige Wellenachse zu blockieren. Dazu besitzt jede Bremse einen Rotor 80, der drehfest mit der Welle 78 verbunden ist, sowie eine Ankerplatte 82. Mit der Bezugsziffer 84 ist ein Elektromagnet bezeichnet. Mit der Bezugsziffer 86 ist eine Feder bezeichnet. Die Feder 86 spannt die Ankerplatte 82 hier derartig vor, dass die Ankerplatte 82 über einen Reibbelag (hier nicht dargestellt) gegen den Rotor 80 drückt und eine Drehbewegung der Welle 78 verhindert. Mit Hilfe des Elektromagneten 84 kann die Ankerplatte 82 gegen die Kraft der Feder 86 vom Rotor 80 weggezogen werden, um eine Drehung der Welle 78 zu ermöglichen. Zum Freigeben (Lüften) der Sicherheitsbremse muss daher ein Steuerstrom 32 durch die Erregerspule 88 fließen, dessen Magnetfeld stark genug ist, um die Ankerplatte 82 gegen die Kraft der Feder 86 zu bewegen.

In dem hiesigen Ausführungsbeispiel ist die gelüftete Position der Ankerplatte 82 (Fig. 3) eine definierte Endposition im Sinne der Erfindung. Das Erreichen der definierten Endposition wird hier mit Hilfe der Schalter 70 bzw. 72 detektiert. Im dargestellten Ausführungsbeispiel ist der Schalter 70 geöffnet, wenn sich die Ankerplatte 82 in der Endposition befindet. In diesem Fall gelangt das Testsignal 68 vom Ausgangsanschluss 66 des Kompaktsteuergerätes 12 nicht mehr zu dem Eingangsanschluss 62, was von der Auswerteeinheit 22 detektiert wird. Gemäß einem Ausführungsbeispiel überwacht die Auswerteeinheit 22 mit Hilfe des über den Schalter 70, 72 zurückgelesenen Testsignals 68, ob die Ankerplatten 82 der Bremsen 16, 18 innerhalb einer definierten Zeitspanne T1 nach Einschalten des Steuerstroms 32 tatsächlich die Endposition erreichen. Ist dies nicht der Fall, signalisiert das Kompaktsteuergerät 12 diesen Fehlerzustand mit Hilfe des Fehlersignals 34 am Ausgangsanschluss 60a.

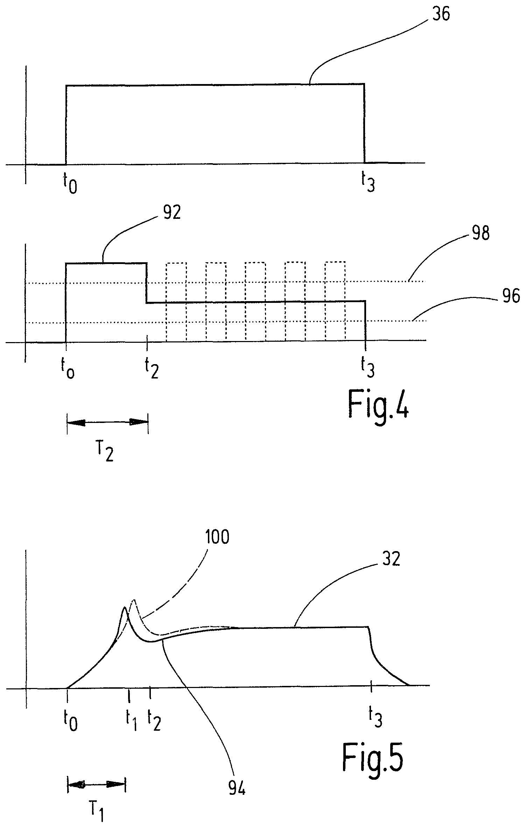

Mit Bezug auf die Fig. 4 und 5 wird nun die Funktion des Kompaktsteuergeräts 12 in weiteren Details erläutert. Fig. 4 zeigt im oberen Diagramm den Verlauf des ersten Steuersignals 36, mit dem die Steuerung 14 die Sollposition der Sicherheitsbremse 16 vorgibt. Das Steuersignal 36 wechselt zum Zeitpunkt t₀ von einem Low-Pegel zu einem High-Pegel und verbleibt bis zum Zeitpunkt t₃ auf dem High-Pegel. Dementsprechend soll die Sicherheitsbremse 16 in der Zeitspanne zwischen t₀ und t₃ geöffnet (gelüftet) sein.

Im unteren Diagramm der Fig. 4 ist der Verlauf einer Steuerspannung 92 dargestellt, die die Auswerteeinheit 12 mit Hilfe der Versorgungsspannung an den Anschlüssen 58a, 58b und mit Hilfe der Leistungsschaltelemente 24a, 24b erzeugt. Zum Zeitpunkt t₀ schließt die Auswerteeinheit 22 die Leistungsschaltelemente 24a, 24b. Dadurch gelangt die Versorgungsspannung von beispielsweise 48 V von den Versorgungsanschlüssen 58a, 58b in voller Höhe an die Erregerspule 88 des Elektromagneten 84. Es entsteht ein Steuerstrom 32, der aufgrund der Gegeninduktion der Erregerspule 88 zunächst langsam und dann weitgehend exponentiell ansteigt. Der entsprechende Stromverlauf 94 ist in Fig. 5 vereinfacht dargestellt. Zum Zeitpunkt t₁ ist das mit Hilfe des Steuerstroms 32 erzeugte Magnetfeld stark genug, um die Ankerplatte 82 gegen die Kraft der Feder 86 zu bewegen. Dies hat zur Folge, dass der Steuerstrom 32 einbricht.

Da zum Halten der Ankerplatte 82 ein geringerer Steuerstrom 32 ausreicht als zum anfänglichen Anziehen der Ankerplatte 82 benötigt wird, senkt die Auswerteeinheit 22 die Steuerspannung 92 hier zum Zeitpunkt t₂ auf eine niedrigere Haltespannung ab. In den bevorzugten Ausführungsbeispielen steuert die Auswerteeinheit 22 die Leistungsschaltelemente 24 dazu pulsweise an, was in Fig. 4 mit gestrichelten Linien dargestellt ist. Die resultierende Steuerspannung besitzt einen gegenüber der anfänglichen Steuerspannung reduzierten Mittelwert. Infolgedessen stellt sich ein weitgehend stationärer Ruhestrom durch die Erregerspule 88 ein. Diese Verhältnisse bleiben so lange weitgehend stationär, bis die Auswerteeinheit 22 die Steuerspannung 92 zum Zeitpunkt t₃ unterbricht. Infolgedessen sinkt der Steuerstrom 32 exponentiell ab, was in Fig. 5 vereinfacht dargestellt ist. Sobald der Steuerstrom 32 so weit abgesunken ist, dass das Magnetfeld des Elektromagneten 84 die Ankerplatte 82 nicht mehr halten kann, drückt die Feder 86 die Ankerplatte 82 wieder gegen den Rotor 80. Die Sicherheitsbremse ist geschlossen.

In den bevorzugten Ausführungsbeispielen überwacht die Auswerteeinheit 22 die Steuerspannung 92 im Hinblick auf eine untere Grenze 96 und im Hinblick auf eine obere Grenze 98. Mit anderen Worten überwacht die Auswerteeinheit 22, ob die Steuerspannung 92 im Dauerbetrieb einen Mittelwert annimmt, der zwischen der definierten unteren Grenze 96 und der definierten oberen Grenze 98 liegt. Wenn die Steuerspannung 92 zu niedrig ist, besteht die Gefahr, dass der Elektromagnet 84 die Ankerplatte 82 nicht im gelüfteten Zustand halten kann. Dies kann ein unerwünschtes Schließen der Bremse zur Folge haben. Ist die Steuerspannung 92 hingegen zu hoch, wirkt sich dies nachteilig auf die Abschaltgeschwindigkeit des Steuerstroms 32 aus. In den bevorzugten Ausführungsbeispielen signalisiert die Auswerteeinheit 22 mit Hilfe des Fehlersignals 34, wenn die Steuerspannung 92 außerhalb des Intervalls liegt, das von der unteren Grenze 96 und der oberen Grenze 98 definiert wird.

Des Weiteren überwacht die Auswerteeinheit 22 in den bevorzugten Ausführungsbeispielen das Zeitintervall T₁ zwischen dem Einschalten der Steuerspannung 92 und dem Zeitpunkt t₁, an dem die Ankerplatte 82 die definierte Endposition gemäß Fig. 3 erreicht hat. Ist dieses Zeitintervall zu lang, signalisiert die Auswerteeinheit 22 dies ebenfalls mit Hilfe des Fehlersignals 34.

Des Weiteren überwacht die Auswerteeinheit 22 in den bevorzugten Ausführungsbeispielen die Signale an den Eingangs- und Ausgangsanschlüssen auf etwaige Querschlüsse, Masseschlüsse oder Unterbrechungen. Ein etwaiger Fehler wird auch in diesem Fall mit Hilfe des Fehlersignals 34 signalisiert.

Gemäß einem weiteren Ausführungsbeispiel kann die Auswerteeinheit 22 das Erreichen der Endposition der Ankerplatte 82 anhand des Stromverlaufs 94 detektieren. In diesem Ausführungsbeispiel besitzt die Auswerteeinheit 22 einen Speicher (hier nicht dargestellt), in dem ein definierter Referenzverlauf 100 in Form von Tabellenwerten oder in Form von Parametern einer Referenzfunktion gespeichert ist. Die Auswerteeinheit 22 misst den aktuellen Verlauf 94 des Steuerstroms 32 und vergleicht diesen mit dem Referenzverlauf 100. Dabei genügt es, wenn der Vergleich des aktuellen Stromverlaufs 94 und des Referenzverlaufs 100 in Bezug auf charakteristische Eigenschaften erfolgt, beispielsweise den Einbruch des Stromverlaufs nach Lösen der Ankerplatte 82.

In weiteren Ausführungsbeispielen ist es möglich, anstelle eines mechanischen Schalters 70, 72 einen berührungslosen Näherungsschalter zu verwenden, mit dessen Hilfe das Erreichen der definierten Endposition der Ankerplatte 82 detektiert werden kann. Darüber hinaus ist es in weiteren Ausführungsbeispielen möglich, die Überwachung des Stromverlaufs 94 mit der Verwendung eines kontaktbehafteten und/oder berührungslosen Schalters zu kombinieren.

## Patentansprüche

1. Kompaktsteuergerät zum fehlersicheren Ansteuern eines elektrischen Aktors (16, 18), der in der Lage ist, ein bewegliches Maschinenteil (82) in eine definierte Endposition zu bewegen, mit einem ersten Eingangsanschluss (40) zum Aufnehmen eines ersten externen Steuersignals (36), das eine Sollposition des Maschinenteils (82) vorgibt, mit einem Eingangsteil zum Erfassen eines Positionssignals (68), das eine Istposition des Maschinenteils (82) an der definierten Endposition signalisiert, mit einem Leistungsteil mit zumindest einem Leistungsschaltelement (24), das dazu ausgebildet ist, einen Steuerstrom (32) für den Aktor (16, 18) ein- und fehlersicher auszuschalten, mit einem ersten Ausgangsanschluss (54, 56) zum Zuführen des Steuerstroms (32) zu dem elektrischen Aktor (16, 18), mit einem zweiten Ausgangsanschluss (60) zum Bereitstellen eines externen Statussignals (34), und mit einer Auswerteeinheit (22), die dazu ausgebildet ist, das zumindest eine Leistungsschaltelement (24) in Abhängigkeit von dem ersten externen Steuersignal (36) anzusteuern und in Abhängigkeit von dem Positionssignal (68) das externe Statussignal (34) an dem zweiten Ausgangsanschluss (60) zu erzeugen.

2. Kompaktsteuergerät nach Anspruch 1, ferner mit einem zweiten Eingangsanschluss (42) zum Aufnehmen eines zweiten externen Steuersignals (44), das die Sollposition des Maschinenteils (82) redundant mit dem ersten externen Steuersignal (36) vorgibt.

3. Kompaktsteuergerät nach Anspruch 1 oder 2, ferner mit einem dritten Eingangsanschluss (48) zum Aufnehmen eines externen dritten Steuersignals (50), das die Sollposition des Maschinenteils (82) unabhängig von dem ersten externen Steuersignal (36) vorgibt, wobei die Auswerteeinheit (22) den Steuerstrom (32) in Abhängigkeit von dem dritten Steuersignal (50) langsamer abschaltet als in Abhängigkeit von dem ersten Steuersignal (36).

4. Kompaktsteuergerät nach einem der Ansprüche 1 bis 3, wobei das erste externe Steuersignal (36) ein binäres Steuersignal ist.

5. Kompaktsteuergerät nach einem der Ansprüche 1 bis 4, wobei der Eingangsteil zumindest einen weiteren Eingangsanschluss (62) aufweist, über den das Positionssignal (68) als ein externes Positionssignal an die Auswerteeinheit (22) zuführbar ist.

6. Kompaktsteuergerät nach einem der Ansprüche 1 bis 5, ferner mit einem dritten Ausgangsanschluss (66), an dem die Auswerteeinheit (22) ein erstes Testsignal bereitstellt, das über einen externen Positionsschalter als binäres Positionssignal (68) zu dem Eingangsteil rückführbar ist.

7. Kompaktsteuergerät nach einem der Ansprüche 1 bis 6, wobei der Steuerstrom (32) beim Einschalten einen aktuellen Stromverlauf (94) aufweist, der von dem Aktor (16, 18) abhängt, und wobei der Eingangsteil den aktuellen Stromverlauf (94) mit einem definierten Referenzverlauf (100) vergleicht, um das Positionssignal zu bestimmen.

8. Kompaktsteuergerät nach einem der Ansprüche 1 bis 7, wobei die Auswerteeinheit (22) an dem zweiten Ausgangsanschluss (60) ein Fehlersignal (34) erzeugt, wenn das Positionssignal innerhalb einer definierten ersten Zeitspanne (T₁) nach Einschalten des Steuerstroms (32) keine Istposition des Maschinenteils (82) an der definierten Endposition signalisiert.

9. Kompaktsteuergerät nach einem der Ansprüche 1 bis 8, wobei das zumindest eine Leistungsschaltelement (24) ein erstes Leistungsschaltelement (24a) und ein zweites Leistungsschaltelement (24b) beinhaltet, die den Steuerstrom (32) redundant zueinander schalten.

10. Kompaktsteuergerät nach einem der Ansprüche 1 bis 9, wobei der erste Ausgangsanschluss einen ersten positiven Ausgangsanschluss (54a) und einen ersten negativen Ausgangsanschluss (54b) beinhaltet, die zusammen einen redundanten zweipoligen Ausgang zum Anschließen des Aktors (16, 18) bilden.

11. Kompaktsteuergerät nach einem der Ansprüche 1 bis 10, wobei der Leistungsteil eine Steuerspannung (92) erzeugt, die den Steuerstrom (32) zu dem Aktor hervorruft, und wobei die Auswerteeinheit die Steuerspannung (92) nach Ablauf einer definierten zweiten Zeitspanne (T₂) nach Einschalten des Steuerstroms (32) absenkt.

12. Kompaktsteuergerät nach einem der Ansprüche 1 bis 11, wobei der Leistungsteil eine Steuerspannung (92) beinhaltet, die den Steuerstrom (32) zu dem Aktor (16, 18) hervorruft, wobei die Auswerteeinheit (22) die Steuerspannung (92) in Bezug auf eine untere Grenze (96) und in Bezug auf eine obere Grenze (98) überwacht, und wobei die Auswerteeinheit (22) das externe Statussignal (34) auch in Abhängigkeit von der überwachten Steuerspannung erzeugt.

13. Kompaktsteuergerät nach einem der Ansprüche 1 bis 12, wobei das zumindest eine Leistungsschaltelement (24) dazu ausgebildet ist, einen Steuerstrom von mehr als 2 A zu schalten.

14. Vorrichtung zum fehlersicheren Halten von Lasten, mit einer mechanischen Bremse (16, 18), die einen Rotor (80) und eine Ankerplatte (82) aufweist, wobei die Ankerplatte (82) über zumindest eine Feder (86) gegen den Rotor (80) vorgespannt ist, um diesen gegen Bewegung zu sichern, ferner mit einem Elektromagneten (84), der dazu ausgebildet ist, die Ankerplatte (82) gegen die Feder (86) in eine Freigabeposition zu bewegen, und mit einem Kompaktsteuergerät (12) nach einem der Ansprüche 1 bis 13, wobei der Elektromagnet (84) an dem ersten Ausgangsanschluss (54) des Kompaktsteuergeräts (12) angeschlossen ist, und wobei das Positionssignal die Freigabeposition der Ankerplatte (82) als definierte Endposition signalisiert.

## Claims

1. A compact control device for failsafely controlling an electrical actuator (16, 18), which is capable of moving a movable machine part (82) into a defined end position, the compact control device comprising a first input connection (40) for receiving a first external control signal (36) which represents a desired position of the machine part (82), comprising an input part for detecting a position signal (68) which signals an actual position of the machine part (82) at the defined end position, comprising a power section having at least one power switching element (24) designed to switch on and failsafely switch off a control current (32) for the actuator (16, 18), comprising a first output connection (54, 56) for supplying the control current (32) to the electrical actuator (16, 18), comprising a second output connection (60) for providing an external status signal (34), and comprising an evaluation unit (22), which is designed to actuate the at least one power switching element (24) depending on the first external control signal (36) and to generate the external status signal (34) at the second output connection (60) depending on the position signal (68).

2. The compact control device of claim 1, further comprising a second input connection (42) for receiving a second external control signal (44) which represents the desired position of the machine part (82) in a redundant manner with the first external control signal (36).

3. The compact control device of claim 1 or 2, further comprising a third input connection (48) for receiving an external third control signal (50), which represents the desired position of the machine part (82) independently of the first external control signal (36), wherein the evaluation unit (22) disconnects the control current (32) more slowly depending on the third control signal (50) than depending on the first control signal (36).

4. The compact control device of one of claims 1 to 3, wherein the first external control signal (36) is a binary control signal.

5. The compact control device of one of claims 1 to 4, wherein the input part has at least one further input connection (62), via which the position signal (68) can be supplied to the evaluation unit (22) as an external position signal.

6. The compact control device of one of claims 1 to 5, further comprising a third output connection (66), at which the evaluation unit (22) provides a first test signal, which can be fed back to the input part as a binary position signal (68) via an external position switch.

7. The compact control device of one of claims 1 to 6, wherein, during switch-on, the control current (32) has a present current profile (94) which is dependent on the actuator (16, 18), and wherein the input part compares the present current profile (94) with a defined reference profile (100) in order to determine the position signal.

8. The compact control device of one of claims 1 to 7, wherein the evaluation unit (22) generates a fault signal (34) at the second output connection (60) when the position signal does not signal an actual position of the machine part (82) at the defined end position within a defined first time span (T₁) after switch-on of the control current (32).

9. The compact control device of one of claims 1 to 8, wherein the at least one power switching element (24) comprises a first power switching element (24a) and a second power switching element (24b), which switch the control current (32) redundantly with respect to one another.

10. The compact control device of one of claims 1 to 9, wherein the first output connection comprises a first positive output connection (54a) and a first negative output connection (54b), which together form a redundant two-pole output for connection of the actuator (16, 18).

11. The compact control device of one of claims 1 to 10, wherein the power section generates a control voltage (92), which causes the control current (32) to the actuator, and wherein the evaluation unit decreases the control voltage (92) after a defined second time span (T₂) has elapsed following switch-on of the control current (32).

12. The compact control device of one of claims 1 to 11, wherein the power section comprises a control voltage (92) which causes the control current (32) to the actuator (16, 18), wherein the evaluation unit (22) monitors the control voltage (92) in respect of a lower limit (96) and in respect of an upper limit (98), and wherein the evaluation unit (22) generates the external status signal (34) depending on the monitored control voltage as well.

13. The compact control device of one of claims 1 to 12, wherein the at least one power switching element (24) is designed to switch a control current of more than 2A.

14. An apparatus for the failsafe holding of weights, comprising a mechanical brake (16, 18), which has a rotor (80) and an armature plate (82), wherein the armature plate (82) is biased against the rotor (80) via at least one spring (86) in order to secure said rotor against movement, further comprising an electromagnet (84), designed to move the armature plate (82) counter to the spring (86) into a release position, and comprising a compact control device (12) according to one of claims 1 to 13, wherein the electromagnet (84) is connected to the first output connection (54) of the compact control device (12), and wherein the position signal signals the release position of the armature plate (82) as the defined end position.

## Revendications

1. Appareil de commande compact permettant de commander sans risque d'erreur un actionneur électrique (16, 18) pouvant déplacer une pièce mécanique (82) mobile jusqu'à une position de fin de course définie, comportant une première borne d'entrée (40) pour la réception d'un premier signal de commande externe (36) qui prédéfinit une position théorique de la pièce mécanique (82), un élément d'entrée pour l'enregistrement d'un signal de position (68) qui signale une position effective de la pièce mécanique (82) à la position de fin de course définie, un élément de puissance muni d'au moins un élément sectionneur de puissance (24) qui est conçu pour appliquer et pour couper sans risque d'erreur un courant de commande (32) pour l'actionneur (16, 18), une première borne de sortie (54, 56) pour délivrer le courant de commande (32) à l'actionneur électrique (16, 18), une deuxième borne de sortie (60) pour fournir un signal d'état externe (34), et une unité d'évaluation (22) qui est conçue pour commander l'au moins un élément sectionneur de puissance (24) en fonction du premier signal de commande externe (36) et pour générer le signal d'état externe (34) au niveau de la deuxième borne de sortie (60) en fonction du signal de position (68).

2. Appareil de commande compact selon la revendication 1, comportant en outre une deuxième borne d'entrée (42) pour recevoir un deuxième signal de commande externe (44) qui prédéfinit de manière redondante la position théorique de la pièce mécanique (82) au moyen du premier signal de commande externe (36).

3. Appareil de commande compact selon la revendication 1 ou 2, comprenant en outre une troisième borne d'entrée (48) pour recevoir un troisième signal de commande externe (50) qui détermine la position théorique de la pièce mécanique (82) indépendamment du premier signal de commande externe (36), dans lequel l'unité d'évaluation (22) coupe le courant de commande (32) en fonction du troisième signal de commande (50) plus lentement qu'en fonction du premier signal de commande (36).

4. Appareil de commande compact selon l'une des revendications 1 à 3, dans lequel le premier signal de commande externe (36) est un signal de commande binaire.

5. Appareil de commande compact selon l'une des revendications 1 à 4, dans lequel l'élément d'entrée comporte au moins une autre borne d'entrée (62) par l'intermédiaire de laquelle le signal de position (68) peut être délivré à l'unité d'évaluation (22) en tant que signal de position externe.

6. Appareil de commande compact selon l'une des revendications 1 à 5, comportant en outre une troisième borne de sortie (66) au niveau de laquelle l'unité d'évaluation (22) fournit un premier signal de test qui peut être renvoyé à l'élément d'entrée par l'intermédiaire d'un commutateur de position externe en tant que signal de position binaire (68).

7. Appareil de commande compact selon l'une des revendications 1 à 6, dans lequel le courant de commande (32) présente, lors de la mise sous tension, une caractéristique de courant (94) qui dépend de l'actionneur (16, 18), et dans lequel l'élément d'entrée compare la caractéristique de courant (94) à une caractéristique de référence définie (100) pour déterminer le signal de position.

8. Appareil de commande compact selon l'une des revendications 1 à 7, dans lequel l'unité d'évaluation (22) génère un signal d'erreur (34) au niveau de la deuxième borne de sortie (60) lorsque le signal de position ne signale aucune position effective de la pièce mécanique (82) à la position de fin définie au cours d'une première période définie (T₁) après l'application du courant de commande (32).

9. Appareil de commande compact selon l'une des revendications 1 à 8, dans lequel l'au moins un élément sectionneur de puissance (24) comprend un premier élément sectionneur de puissance (24a) et un deuxième élément sectionneur de puissance (24b) qui commutent le courant de commande (32) de manière redondante l'un par rapport à l'autre.

10. Appareil de commande compact selon l'une des revendications 1 à 9, dans lequel la première borne de sortie comprend une première borne de sortie positive (54a) et une première borne de sortie négative (54b) qui forment ensemble une sortie bipolaire redondante pour le raccordement de l'actionneur (16, 18).

11. Appareil de commande compact selon l'une des revendications 1 à 10, dans lequel l'élément de puissance génère une tension de commande (92) qui provoque le passage du courant de commande (32) vers l'actionneur, et dans lequel l'unité d'évaluation abaisse la tension de commande (92) après écoulement d'une deuxième période définie (T₂) après l'application du courant de commande (32).

12. Appareil de commande compact selon l'une des revendications 1 à 11, dans lequel l'élément de puissance comprend une tension de commande (92) qui provoque le passage du courant de commande (32) vers l'actionneur (16, 18), dans lequel l'unité d'évaluation (22) surveille la tension de commande (92) par rapport à une limite inférieure (96) et à une limite supérieure (98), et dans lequel l'unité d'évaluation (22) génère également le signal d'état externe (34) en fonction de la tension de commande surveillée.

13. Appareil de commande compact selon l'une des revendications 1 à 12, dans lequel l'au moins un élément sectionneur de puissance (24) est conçu pour commuter un courant de commande de plus de 2A.

14. Dispositif de maintien de charges sans risque d'erreur, comprenant un frein mécanique (16, 18) qui comporte un rotor (80) et une plaque d'armature (82), dans lequel la plaque d'armature (82) est précontrainte contre le rotor (80) par l'intermédiaire d'au moins un ressort (86) pour l'empêcher de se déplacer, comprenant en outre un électroaimant (84) conçu pour déplacer la plaque d'armature (82) contre le ressort (86) vers une position de libération, et comprenant un appareil de commande compact (12) selon l'une des revendications 1 à 13, dans lequel l'électroaimant (84) est raccordé à la première borne de sortie (54) de l'appareil de commande compact (12), et dans lequel le signal de position signale la position de libération de la plaque d'armature (82) en tant que position de fin de course définie.
